(19) Europäisches Patentamt
European Patent Office
Office européen des brevets

(11) Publication number: 0 064 353
B1

(12) **EUROPEAN PATENT SPECIFICATION**

(45) Date of publication of patent specification: **21.05.86**

(51) Int. Cl.$^4$: **A 01 N 25/32,** C 07 D 277/56

(21) Application number: **82302016.9**

(22) Date of filing: **20.04.82**

(54) **Use of 2,4-disubstituted-5-thiazolecarboxylic acids and derivatives for reducing injury to crop plants by acetamide herbicides.**

(30) Priority: **22.04.81 US 256326**
**22.04.81 US 256335**

(43) Date of publication of application:
**10.11.82 Bulletin 82/45**

(45) Publication of the grant of the patent:
**21.05.86 Bulletin 86/21**

(84) Designated Contracting States:
**AT FR GB IT**

(56) References cited:
**GB-A-2 020 662**

(73) Proprietor: **MONSANTO COMPANY**
**Patent Department 800 North Lindbergh Boulevard**
**St. Louis, Missouri 63166 (US)**

(72) Inventor: **Howe, Robert Kenneth**
**12176 Dunsinane Court**
**Bridgeton Missouri 63044 (US)**
Inventor: **Lee, Len Fang**
**2561 Trenton Station**
**St. Charles Missouri 63301 (US)**

(74) Representative: **Lunt, John Cooper et al**
**Monsanto Europe S.A. Patent Department**
**Avenue de Tervuren 270-272 Letter Box No 1**
**B-1150 Brussels (BE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 064 353 B1

## Description

The invention relates to novel compositions and methods for reducing injury to crop plants by certain acetanilide herbicides, which comprises treating the crop plant locus or the seed of the crop plant with an effective amount of a 2,4 - disubstituted - 5 - thiazolecarboxylic acid or derivative thereof that will be described more fully below.

U.S.—A—4,199,506 discloses the same thiazole compounds being used to protect crop plants from the harmful effects of certain other herbicides. The same patent also discloses the preparation of the thiazole compounds.

### Background of the invention

Acetamide herbicides are very useful for controlling certain weeds, especially grasses, in the presence of growing crops. However, many of the acetamide herbicides injure certain crop plants, slowing growth and development at application rates necessary to stunt or kill the weeds. Accordingly, some of the acetamide herbicides cannot be used for controlling weeds in the presence of certain crops. Obviously, a safening agent consisting of a composition that could be used to treat the seed of the crop plant, the crop plant locus or the crop plant itself, resulting in a reduction of injury due to application of the herbicide without a corresponding reduction of herbicidal action on the weeds, would be quite beneficial.

### Description of the invention

In accordance with the novel aspects of the present invention, injury to crop plants, such as corn, rice and sorghum, due to application thereto of the acetanilide herbicides 2 - chloro - 2′ - methyl - 6′ - trifluoromethyl - N - (ethoxymethyl)acetanilide and 2 - chloro - 2′ - methyl - 6′ - methoxy - N - (isopropoxymethyl)acetanilide may be reduced without a corresponding reduction in injury to the weeds by application to the crop plant locus or the seed of the crop plant prior to planting of an effective amount of a safening agent comprising a 2,4 - disubstituted - 5 - thiazolecarboxylic acid or derivative thereof having the formula

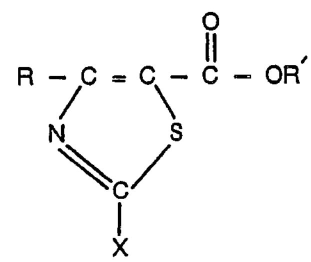

wherein X is selected from chloro, bromo, iodo and fluoro, R is haloalkyl, and R′ is selected from hydrogen, agriculturally acceptable cations, alkyl, alkenyl, or alkynyl groups having up to 5 carbon atoms, alkoxyalkyl, haloalkyl, benzyl, phenyl and phenyl substituted by one or two members independently selected from halogen, alkyl groups having up to 5 carbon atoms, trifluoromethyl and nitro.

The terms "alkyl", "alkenyl" and "alkynyl" are understood to include branched and unbranched groups. When R′ is lower alkenyl, allyl is preferred. When R′ is lower alkynyl, propargyl is preferred.

The term "haloalkyl" is understood to mean those alkyl moieties having up to five carbon atoms wherein at least one hydrogen atom has been replaced by a halogen atom. Specifically included are those alkyl moieties in which all of the hydrogen atoms have been replaced by halogen atoms, such as trifluoromethyl.

The term "agriculturally acceptable cations" is understood to mean those cations that are commonly used to form the salt of the free acid. Such cations include, but are not limited to, alkali metal, alkaline earth, substituted amine and ammonium cations.

The amount of safening agent employed in the method and compositions of the invention will vary depending upon the particular herbicide with which the agent is employed, the rate of application of the herbicide, the crop to be protected as well as the manner of application of the safening agent. In each instance, the amount employed is a safening effective amount, i.e., the amount which reduces crop injury by the acetamide herbicide.

The safening agent may be applied to the plant locus in a mixture with the herbicide, sequentially or it may be applied directly to the seed of the crop plant. By application to the "plant locus" is meant application to the plant growing medium, such as the soil, as well as the seeds, emerging seedlings, roots, stems, leaves, flowers, fruits or other plant parts.

The amount of herbicide employed is well within the skill of the art and is disclosed in various patents.

The herbicidal use of 2 - chloro - 2′ - methyl - 6′ - trifluoromethyl - N - (ethoxymethyl)acetanilide is disclosed in Belgian Patent No. 887,997 issued September 18, 1981. The herbicidal use of 2 - chloro - 2′ - methyl - 6′ - methoxy - N - (isopropoxymethyl)acetanilide is disclosed in Belgian Patent No. 887,995 issued September 18, 1981.

To illustrate the effectiveness of the 2,4-disubstituted-5-thiazolecarboxylic acids and derivatives

thereof, the following examples are presented. These examples are presented merely as being illustrative of the novel aspects of the invention and are not intended to be a limitation as to the scope thereof.

Example 1

A good grade of top soil is placed in a container and compacted to a depth of approximately 1.27 cm from the top of said container. A predetermined number of seeds of each of the crop species to be tested are placed on top of the soil. A quantity of soil sufficient to substantially fill the container is measured and placed in a second container. A measured quantity of the safening agent dispersed or dissolved in a suitable carrier is applied to the soil in the second container. A measured quantity of the acetamide herbicide dispersed or dissolved in a suitable carrier is then sprayed on the soil already treated with the safening agent. The soil containing the safening agent and herbicide is thoroughly mixed. This mixing is sometimes referred to as incorporation of the herbicide and safening agent into the soil. The mixing or incorporation provides a substantially uniform distribution of the safening agent and herbicide throughout the soil. The seeds are covered with the soil containing the safening agent and acetamide herbicide and the pots are leveled. The pots are then placed on a sand bench in the greenhouse and watered from below as needed. The plants are observed at the end of approximately 21 days and the results in terms of percent inhibition of each seed lot are recorded. For each test series, a pot is also prepared containing no acetamide herbicide and no safening agent as a control. Additionally, for each test, pots are prepared with soil covering the seed containing no acetamide herbicide and only the measured amount of safening agent being incorporated into the soil covering the seeds to ascertain any herbicidal effect of the safening agent alone. For each series of tests, the herbicidal effect of the acetamide herbicide is observed from pots treated with the same quantity of herbicide alone. The "safening effect" is determined by adding the herbicidal effect of the acetamide herbicide when applied alone to the herbicidal effect of the safening agent when applied alone (in no instance, however, will this sum be greater than 100) and subtracting from that the herbicidal effect obtained when both the herbicide and safening agent are incorporated into the soil as discussed above.

Example 2

Sorghum seeds were treated with a solution of the appropriate safening agent in dichloromethane. The solvent was evaporated which left only the safening agent on the seed. Untreated and treated sorghum seeds were planted in pots. Selected weed species were planted in separate pots. 1.27 cm deep soil cover layer was placed on the pre-seeded pots. The soil surface was then treated with the herbicide. Approximately 21 days later, the results were observed and recorded. Table I summarizes the results observed when tests were conducted in accordance with Example 2.

TABLE I

| Herbicide | Rate of herbicide (kg/h) | Safening agent | Percent sorghum inhibition — Seed treatment concentration (grams of safening agent/kilograms of seed) | | | |
|---|---|---|---|---|---|---|
| | | | 0 | 0.6 | 2.5 | 10 |
| 2-chloro-2′-methyl-6′-methoxy-N-(isopropoxymethyl)acetanilide | — | Ethyl 2-chloro-4-trifluoromethyl-5-thiazolecarboxylate | 0 | 0 | 0 | 25 |
| | 0.28 | | 40 | 20 | 10 | 20 |
| | 1.12 | | 83 | 45 | 45 | 30 |
| | 4.48 | | 97 | 80 | 75 | 55 |
| 2-chloro-2′-methyl-6′-methoxy-N-(isopropoxymethyl)acetanilide | — | Benzyl 2-chloro-4-trifluoromethyl-5-thiazolecarboxylate | 0 | 0 | 0 | 3 |
| | 0.28 | | 43 | 5 | 5 | 8 |
| | 1.12 | | 85 | 55 | 33 | 40 |
| | 4.48 | | 99 | 83 | 80 | 75 |

Example 3

A mixture of 2-chloro-2'-methyl-6'-trifluoromethyl-N-(ethoxymethyl)acetanilide and the safening agent was applied to corn, rice and sorghum to determine the safening effect. As before, the herbicide and safening agent were also applied separately and the safening effect determined. The results are summarized in Table II.

TABLE II

| Safening agent | Rate of safening agent (kg/h) | Rate of herbicide (kg/h) | Crop | Safening effect |
|---|---|---|---|---|
| Ethyl 2-chloro-4-trifluoro-methyl-5-thiazole carboxylate | 8.96 | 0.28 | Sorghum | 75 |
| | 8.96 | 1.12 | Sorghum | 8 |
| | 8.96 | 4.48 | Sorghum | 9 |
| Ethyl 2-chloro-4-trifluoro-methyl-5-thiazolecarboxylate | 8.96 | 0.28 | Rice | 5 |
| | 8.96 | 1.12 | Rice | 0 |
| | 8.96 | 4.48 | Rice | 0 |
| Ethyl 2-chloro-4-trifluoro-methyl-5-thiazolecarboxylate | 8.96 | 0.28 | Corn | 0 |
| | 8.96 | 1.12 | Corn | 10 |
| | 8.96 | 4.48 | Corn | 20 (30% inhibition reduced to 10%) |
| Benzyl 2-chloro-4-trifluoro-methyl-5-thiazolecarboxylate | 8.96 | 0.28 | Sorghum | 70 |
| | 8.96 | 1.12 | Sorghum | 18 |
| | 8.96 | 4.48 | Sorghum | 1 |
| Benzyl 2-chloro-4-trifluoro-methyl-5-thiazolecarboxylate | 8.96 | 0.28 | Rice | 10 |
| | 8.96 | 1.12 | Rice | 0 |
| | 8.96 | 4.48 | Rice | 0 |
| Benzyl 2-chloro-4-trifluoro-methyl-5-thiazolecarboxylate | 8.96 | 0.28 | Corn | 0 |
| | 8.96 | 1.12 | Corn | 10 |
| | 8.96 | 4.48 | Corn | 20 (30% inhibition reduced to 10%) |

Example 4

A mixture of the acetanilide herbicide and benzyl 2-chloro-4-trifluoromethyl-5-thiazolecarboxylate as the safening agent was applied to the soil surface which had been preseeded with the appropriate crop and weed. Observations were recorded approximately 17 days after treatment. Results are summarized in Table III below.

TABLE III

| Herbicide | Rate of herbicide (kg/h) | Rate of safening agent (kg/h) | % Inhibition | |
|---|---|---|---|---|
| | | | Corn | Sorghum |
| 2-chloro-2'-methyl-6'-methoxy-N-(isopropoxymethyl)acetanilide | 1.12 | — | 78 | 99 |
| | 0.28 | — | 63 | 82 |
| " | 1.12 | 8.96 | 35 | 15 |
| | 0.28 | 8.96 | 18 | 13 |
| 2-chloro-2'-methyl-6'-trifluoro-methyl-N-(ethoxymethyl)-acetanilide | 1.12 | — | 5 | 99 |
| | 0.28 | — | 0 | 82 |
| | 1.12 | 8.96 | 5 | 33 |
| " | 0.28 | 8.96 | 0 | 10 |

Example 5

Sorghum seeds were treated with an 80% powder formulation of benzyl 2 - chloro - 4 -

trifluoromethyl - 5 - thiazolecarboxylate and then planted in field plots. Herbicide was applied to the soil as a pre-emergent and observations made about 6 weeks later. Table IV summarizes the results.

TABLE IV

| Herbicide | Rate of herbicide (kg/h) | % Inhibition | | % Sorghum inhibition — Seed treatment concentration (grams safening agent/kilograms of seed) | |
|---|---|---|---|---|---|
| | | Foxtail | Pigweed | 0 | 0.125 |
| 2-chloro-2'-methyl-6'-trifluoromethyl-N-(ethoxymethyl)acetanilide | 1.12 | 100 | 99 | 3 | 7 |
| | 2.24 | 100 | 99 | 5 | 0 |
| | 4.48 | 100 | 99 | 40 | 12 |

The above examples illustrate that the thiazolecarboxylates of the present invention are useful in reducing herbicidal injury to crop plants, especially sorghum and rice. The safening agents may be applied to the plant locus as a mixture, i.e., a mixture of a herbicidally effective amount of acetamide herbicide and a safening effective amount of safening agent, or sequentially, i.e., the plant locus may be treated with an effective amount of the herbicide followed by a treatment with the safening agent or vice versa. The ratio of herbicide to safening agent may vary depending upon the crop to be protected, weeds to be inhibited, herbicide used, etc., but normally a herbicide to safening agent ratio ranging from 1:25 to 25:1 (preferably 1:5 to 5:1) parts by weight may be employed.

The herbicide, safening agent or mixture thereof may be applied to the plant locus alone or the herbicide, safening agent or mixture thereof may be applied in conjunction with a material referred to in the art as an adjuvant in liquid or solid form. Mixtures containing the appropriate herbicide and safening agent usually are prepared by admixing said herbicide and safening agent with an adjuvant including diluents, extenders, carriers and conditioning agents to provide compositions in the form of finely-divided particulate solids, granules, pellets, wettable powders, dusts, solutions and aqueous dispersions or emulsions. Thus, the mixture may include an adjuvant such as a finely-divided particulate solid, a solvent liquid of organic origin, water, a wetting agent, dispersing agent, or emulsifying agent or any suitable combination of these.

When applying the herbicide, safening agent or mixture thereof to the plant locus, useful finely-divided solid carriers and extenders include, for example, the talcs, clays, pumice, silica, diatomaceous earth, quartz, Fullers, earth, sulfur, powdered cork, powdered wood, walnut flour, chalk, tobacco dust and charcoal. Typical liquid diluents useful include for example, Stoddard solvent, acetone, alcohols, glycols, ethyl acetate and benzene. Such compositions, particularly liquids and wettable powders, usually contain as a conditioning agent one or more surface-active agents in amounts sufficient to render a given composition readily dispersible in water or in oil. By the term "surface-active agent", it is understood that wetting agents, dispersing agents, suspending agents and emulsifying agents are included therein. Such surface-active agents are well known and reference is made to U.S. Patent No. 2,547,724, Columns 3 and 4, for detailed examples of the same.

Compositions of this invention generally contain from about 5 to 95 parts herbicide and safening agent, about 1 to 50 parts surface-active agent and about 4 to 94 parts solvent, all parts being by weight based on the total weight of the composition.

The application of the herbicide, safening agent or mixture thereof in a liquid or particulate solid form can be carried out by conventional techniques utilizing, for example, spreaders, power dusters, boom and hand sprayers, spray dusters and granular applications. The compositions can also be applied from airplanes as a dust or spray. If desired, application of the compositions of the invention to plants can be accomplished by incorporating the compositions in the soil or other media.

The above examples also illustrate that the crop may be protected by treating the crop seed with an effective amount of safening agent prior to planting. Generally, small amounts of safening agent are required to treat such seeds. Table I illustrates that a weight ratio of as little as 0.6 parts of safener per 1000 parts of seed may be effective. The amount of safener utilized in treating the seed may be increased if desired. Generally, however, a weight ratio of safening agent to seed weight may range from 0.1 to 10.0 parts of safening agent per 1000 parts of seed. The determination of the effective amount of safening agent required is well within the skill of the art.

Since only a very small amount of active safening agent is usually required for the seed treatment, the compound preferably is formulated as a powder or an emulsifiable concentrate which can be diluted with water by the seed treater for use in the seed treating apparatus. Of course, under certain conditions, it may be desirable to dissolve the safening agent in an organic solvent for use as a seed treatment or the pure compound alone may be used under properly controlled conditions.

There are thus also provided by this invention novel seed treating compositions containing one or more of the described active safening agents intimately dispersed in an inert carrier or diluent for the intended use. Such carriers may be either solids, such as talc, clay, diatomaceous earth, sawdust and

calcium carbonate or liquids such as water, kerosene, acetone, benzene, toluene and xylene in which the active agent may be either dissolved or dispersed. Emulsifying agents are advisably used to achieve a suitable emulsion if two immiscible liquids are used as a carrier. Wetting agents may also be used to aid in dispersing the active safening agent in liquids used as a carrier in which the agent is not completely soluble. Emulsifying agents and wetting agents are sold under numerous tradenames and may be either pure compounds, mixtures of compounds of the same general groups, or they may be mixtures of compounds of different classes. Typical satisfactory surface-active agents which may be used are alkali metal higher alkylarylsulfonates such as sodium dodecylbenzenesulfonate and the sodium salts of alkylnaphthalenesulfonic acids, fatty alcohol sulfates such as the sodium salts of monoesters of sulfuric acid with n-aliphatic alcohols containing 8—18 carbon atoms, long chain quaternary ammonium compounds, sodium salts of petroleum-derived alkylsulfonic acids, polyethylene sorbitan monooleate, alkylaryl polyether alcohols, water-soluble lignin sulfonate salts, alkalicasein compositions, long chain alcohols usually containing 10—18 carbon atoms, and condensation products of ethylene oxide with fatty acids, alkylphenols and mercaptans.

Preparation of the safening agents

The 2,4-disubstituted-5-thiazolecarboxylic acids and derivatives of the foregoing formula may be prepared generally utilizing one of two procedures. The first method encompasses the preparation of 2 - oxo - 2,3 - dihydro - 4 - substituted - 5 - thiazolecarboxylates by reacting portions of β-aminoacrylates and chlorocarbonylsulfenyl chloride. Crystallization of the resulting mixture from hexane yields the appropriate 2 - oxo - 2,3 - dihydro - 4 - substituted - 5 - thiazolecarboxylate which may be converted to the appropriate 2 - chloro - 4 - substituted - 5 - thiazolecarboxylate by reaction with excess phosphorus oxychloride. Excess phosphorus oxychloride is removed under reduced pressure and the residue poured into ice water. Extraction with ether and washing with 5% sodium hydroxide results in the 2 - chloro - 4 - substituted - 5 - thiazolecarboxylate. For purposes of clarification, this method is summarized by the following scheme:

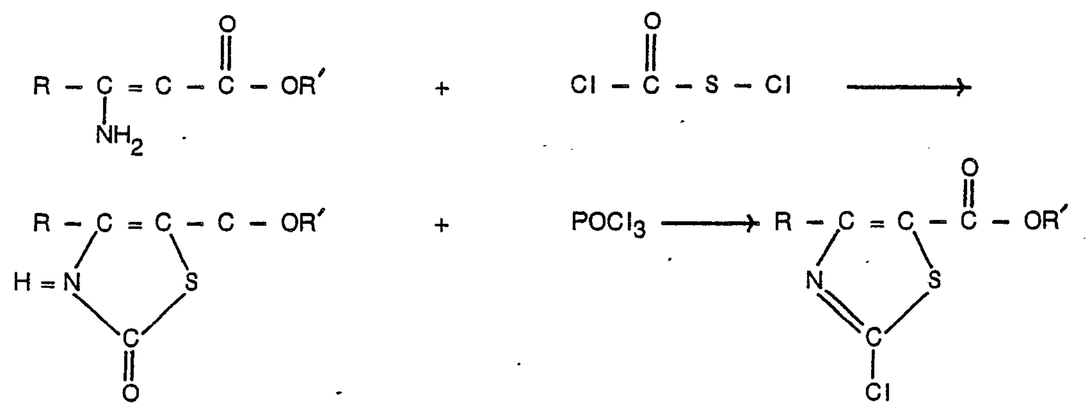

β-aminoacrylates may be prepared according to known procedures such as that specified in Lutz et al, *Journal of Heterocyclic Chemistry*, Volume 9, Page 513 (1972) or they may be prepared by mixing 0.5 moles of ethyl acetoacetate or methyl acetoacetate in 200 ml of methanol and 100 ml of saturated sodium acetate and passing through the appropriate nitrile (perfluorinated if R is to be perfluorinated) for several hours. The reaction mixture is poured into ice water and the organic layer extracted with ether. The ether solution is dried and concentrated and the residue distilled. A mixture of about 0.1 mole of said residue and 50 ml of 30% ammonium hydroxide or sodium hydroxide is stirred for a long period. The reaction mixture is extracted with methylene chloride and the methylene chloride extracts dried and concentrated. Fractional distillation of the residue results in the β-aminoacrylate.

**Claims**

1. A method for selectively preventing the growth of weeds in the presence of corn or sorghum crop plants which comprises applying to the crop plant locus on acetamide herbicide selected from 2 - chloro - 2′ - methyl - 6′ - methoxy - N - (isopropoxymethyl)acetanilide and 2 - chloro - 2′ - methyl - 6′ - trifluoromethyl - N - (ethoxymethyl)acetanilide, said crop plants having been germinated from seeds treated with a safening effective amount of a compound of the formula

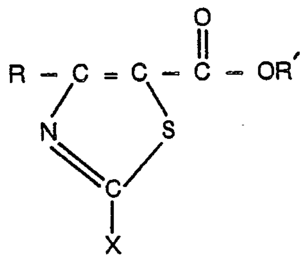

wherein X is selected from chloro, bromo, iodo, fluoro, R is haloalkyl, and R′ is selected from hydrogen, agriculturally acceptable cations, alkyl, alkenyl or alkynyl groups having up to 5 carbon atoms, alkoxyalkyl, haloalkyl, benzyl, phenyl and phenyl substituted by one or two members independently selected from the group consisting of halogen, alkyl groups having up to 5 carbon atoms, trifluoromethyl and nitro.

2. A method according to Claim 1 wherein R is trifluoromethyl and X is chloro.

3. A method according to Claim 1 wherein the crop is sorghum.

4. A method according to Claim 1 wherein the crop is corn.

5. A method according to Claim 2 wherein said herbicide is 2 - chloro - 2′ - methyl - 6′ - methoxy - N - (isopropoxymethyl)acetanilide.

6. A method according to Claim 2 wherein said herbicide is 2 - chloro - 2′ - methyl - 6′ - trifluoromethyl - N - (ethoxymethyl)acetanilide.

7. A method for reducing herbicidal injury to sorghum plants by application thereto of an acetamide herbicide selected from 2 - chloro - 2′ - methyl - 6′ - methoxy - N - (isopropoxymethyl)acetanilide and 2 - chloro - 2′ - methyl - 6′ - trifluoromethyl - N - (ethoxymethyl)acetanilide, which comprises coating the seed of a sorghum plant with a safening effective amount of a compound having the formula

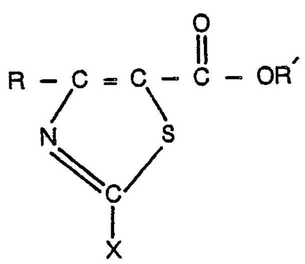

wherein X is selected from the group consisting of chloro, bromo, iodo and fluoro, R is haloalkyl, and R′ is selected from the group consisting of hydrogen, agriculturally acceptable cations, alkyl, alkenyl or alkynyl groups having up to 5 carbon atoms, alkoxyalkyl, haloalkyl, benzyl, phenyl and phenyl substituted by one or two members independently selected from the group consisting of halogen, alkyl groups having up to 5 carbon atoms, trifluoromethyl and nitro.

8. A method according to Claim 7 wherein X is chloro.

9. A method according to Claim 7 wherein R is trifluoromethyl.

10. A method according to Claim 7 wherein X is chloro and R is trifluoromethyl.

11. A mixture which comprises a herbicidally effective amount of an acetamide herbicide selected from 2 - chloro - 2′ - methyl - 6′ - methoxy - N - (isopropoxymethyl)acetanilide and 2 - chloro - 2′ - methyl - 6′ - trifluoromethyl - N - (ethoxymethyl)acetanilide, and a safening effective amount of a compound having the formula

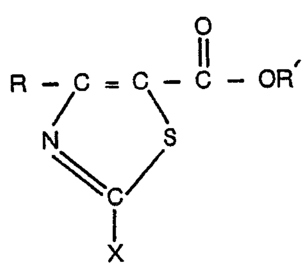

wherein X is selected from chloro, bromo, iodo and fluoro, R is haloalkyl, and R′ is selected from hydrogen, agriculturally acceptable cations, alkyl, alkenyl or alkynyl groups having up to 5 carbon atoms, alkoxyalkyl, haloalkyl, benzyl, phenyl and phenyl substituted by one or two members independently selected from halogen, alkyl groups having up to 5 carbon atoms, trifluoromethyl and nitro; the ratio of herbicide to safening agent being from 1:25 to 25:1.

12. A mixture according to Claim 11 wherein R is trifluoromethyl and X is chloro.

13. A mixture according to Claim 11 wherein said herbicide is 2 - chloro - 2′ - methyl - 6′ - methoxy - N - (isopropoxymethyl)acetanilide.

14. A mixture according to Claim 11 wherein said herbicide is 2 - chloro - 2′ - methyl - 6′ - trifluoromethyl - N - (ethoxymethyl)acetanilide.

15. Soil containing (i) an acetamide herbicide selected from 2 - chloro - 2′ - methyl - 6′ - methoxy - N - (isopropoxymethyl)acetanilide and 2 - chloro - 2′ - methyl - 6′ - trifluoromethyl - N - (ethoxymethyl)acetanilide, and (ii) sorghum seeds coated with a safening effective amount of a compound of the formula

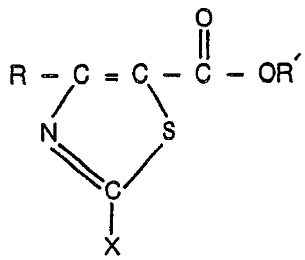

wherein X is selected from chloro, bromo, iodo, fluoro, R is haloalkyl, and R′ is selected from hydrogen, agriculturally acceptable cations, alkyl, alkenyl or alkynyl groups having up to 5 carbon atoms, alkoxyalkyl, haloalkyl, benzyl, phenyl and phenyl substituted by one or two members independently selected from halogen, alkyl groups having up to 5 carbon atoms, trifluoromethyl and nitro.

16. Soil according to Claim 15 wherein the safening compound is ethyl 2 - chloro - 4 - trifluoromethyl - 5 - thiazolecarboxylate or benzyl 2 - chloro - 4 - trifluoromethyl - 5 - thiazolecarboxylate.

## Patentansprüche

1. Verfahren zum selektiven Verhindern des Wachstums von Unkräutern in Anwesenheit von Mais- oder Sorghum-Saatpflanzen, welches das Aufbringen eines Acetamid-Herbizids ausgewählt aus 2 - Chlor - 2′ - methyl - 6′ - methoxy - N - (isopropoxymethyl) - acetanilid und 2 - Chlor - 2′ - methyl - 6′ - trifluormethyl - N - (äthoxymethyl) - acetanilid auf die Saatpflanzenstelle umfaßt, welche Saatpflanzen sich aus Samen entwickelt haben, die mit einem schützend wirkenden Anteil einer Verbindung der Formel

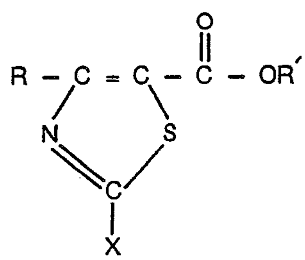

behandelt wurden, worin X Chlor, Brom, Jod oder Fluor bedeutet, R Halogenalkyl darstellt und R′ ausgewählt ist aus Wasserstoff, landwirtschaftlich annehmbaren Kationen, Alkyl-, Alkenyl- oder Alkinylgruppen mit bis zu 5 C-Atomen, Alkoxyalkyl, Halogenalkyl, Benzyl, Phenyl und Phenyl substituiert mit einem oder zwei Substituenten jeweils unabhängig ausgewählt aus der Gruppe bestehend aus Halogen, Alkyl mit bis zu 5 C-Atomen, Trifluormethyl und Nitro.

2. Verfahren gemäß Anspruch 1, worin R Trifluormethyl und X Chlor bedeuten.

3. Verfahren nach Anspruch 1, worin die Saatpflanze Sorghum ist.

4. Verfahren nach Anspruch 1, worin die Saatpflanze Mais ist.

5. Verfahren nach Anspruch 2, worin das genannte Herbizid 2 - Chlor - 2′ - methyl - 6′ - methoxy - N - (isopropoxymethyl) - acetanilid ist.

6. Verfahren nach Anspruch 2, worin das genannte Herbizid 2 - Chlor - 2′ - methyl - 6′ - trifluormethyl - N - (äthoxymethyl) - acetanilid ist.

7. Verfahren zum Vermindern von herbiziden Schäden an Sorghumpflanzen durch Aufbringung eines Acetamid-Herbizids ausgewählt aus 2 - Chlor - 2′ - methyl - 6′ - methoxy - N - (isopropoxmethyl) - acetanilid und 2 - Chlor - 2′ - methyl - 6′ - trifluormethyl - N - (äthoxymethyl) - acetanilid darauf, welches das Überziehen der Samen einer Sorghumpflanze mit einem schützenden wirkenden Anteil einer Verbindung der Formel

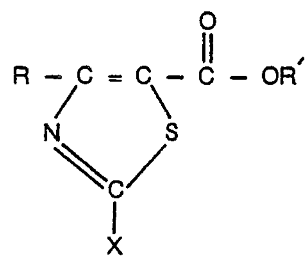

worin X ausgewählt ist aus der Gruppe bestehend aus Chlor, Brom, Jod und Fluor, R Halogenalkyl bedeutet und R′ ausgewählt ist aus der Gruppe bestehend aus Wasserstoff, landwirtschaftlich annehmbaren Kationen, Alkyl-, Alkenyl- oder Alkinylgruppen mit bis zu 5 C-Atomen, Alkoxyalkyl, Halogenalkyl, Benzyl, Phenyl und Phenyl substituiert durch einen oder zwei Substituenten unabhängig ausgewählt aus der Gruppe bestehend aus Halogen, Alkylgruppen mit bis zu 5 C-Atomen, Trifluormethyl und Nitro, umfaßt.

8. Verfahren gemäß Anspruch 7, worin X Chlor ist.

9. Verfahren gemäß Anspruch 7, worin R Trifluormethyl ist.

10. Verfahren gemäß Anspruch 7, worin X Chlor und R Trifluormethyl bedeuten.

11. Mischung, die einen herbizid wirkenden Anteil eines Acetamid-Herbizids, ausgewählt aus 2 - Chlor - 2′ - methyl - 6′ - methoxy - N - (isopropoxymethyl) - acetanilid und 2 - Chlor - 2′ - methyl - 6′ - trifluormethyl - N - (äthoxymethyl) - acetanilid, und einen schützend wirkenden Anteil einer Verbindung der Formel

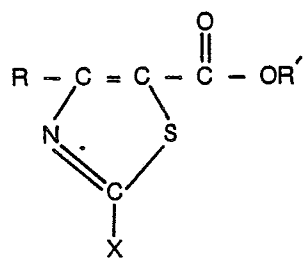

worin X ausgewählt ist aus Chlor, Brom, Jod und Fluor, R Halogenalkyl bedeutet und R′ ausgewählt ist aus Wasserstoff, landwirtschaftlich annehmbaren Kationen, Alkyl-, Alkenyl- oder Alkinylgruppen mit bis zu 5 C-Atomen, Alkoxyalkyl, Halogenalkyl, Benzyl, Phenyl und Phenyl substituiert durch einen oder zwei Substituenten unabhängig ausgewählt aus Halogen, Alkylgruppen mit bis zu 5 C-Atomen, Trifluormethyl und Nitro, umfaßt, wobei das Verhältnis von Herbizid zu Schutzmittel 1:25 bis 25:1 beträgt.

12. Mischung gemäß Anspruch 11, worin R Trifluormethyl und X Chlor bedeuten.

13. Mischung gemäß Anspruch 11, worin das genannte Herbizid 2 - Chlor - 2′ - methyl - 6′ - methoxy - N - (isopropoxymethyl) - acetanilid ist.

14. Mischung gemäß Anspruch 11, worin das genannte Herbizid 2 - Chlor - 2′ - methyl - 6′ - trifluormethyl - N - (äthoxymethyl) - acetanilid ist.

15. Erde, die (i) ein Acetamid-Herbizid ausgewählt aus 2 - Chlor - 2′ - methyl - 6′ - methoxy - N - (isopropoxymethyl) - acetanilid und 2 - Chlor - 2′ - methyl - 6′ - trifluormethyl - N - (äthoxymethyl) - acetanilid und (ii) Sorghumsamen, die mit einem schützend wirkenden Anteil einer Verbindung der Formel

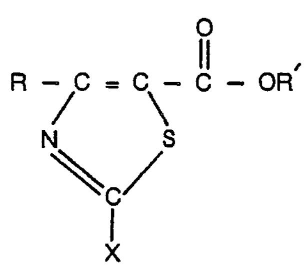

worin X ausgewählt ist aus Chlor, Brom, Jod oder Fluor, R Halogenalkyl bedeutet und R′ ausgewählt ist aus Wasserstoff, landwirtschaftlich annehmbaren Kationen, Alkyl-, Alkenyl- oder Alkinylgruppen mit bis zu 5 C-Atomen, Alkoxyalkyl, Halogenalkyl, Benzyl, Phenyl und Phenyl substituiert durch einen oder zwei Substituenten unabhängig ausgewählt aus Halogen, Alkylgruppen mit bis zu 5 C-Atomen, Trifluormethyl und Nitro, überzogen sind, enthält.

16. Erde gemäß Anspruch 15, worin die schützende Verbindung Äthyl - 2 - chlor - 4 - trifluormethyl - 5 - thiazolcarboxylat oder Benzyl - 2 - chlor - 4 - trifluormethyl - 5 - thiazolcarboxylat ist.

**Revendications**

1. Procédé pour empêcher sélectivement la croissance de mauvaises herbes en présence de plantes cultivées de maïs ou de sorgho qui consiste à appliquer à l'emplacement de la plante cultivée, un herbicide à base d'acétamide choisi parmi le 2 - chloro - 2' - méthyl - 6' - méthoxy - N - (isopropoxyméthyl)acétanilide et le 2 - chloro - 2' - méthyl - 6' - trifluorométhyl - N - (éthoxyméthyl)acétanilide ces plantes cultivées ayant été mises à germer à partir de graines traitées par une quantité efficace comme sécurisant d'un composé répondant à la formule:

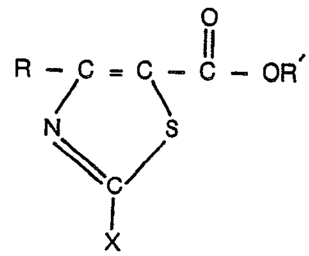

dans laquelle X est choisi parmi les radicaux chloro, bromo, iodo, fluoro, R est un groupe haloalkyle et R' est choisi parmi l'hydrogène, des cations acceptables en agriculture, des groupes alkyle, acényle ou alcynyle ayant jusqu'à 5 atomes de carbone, des groupes alcoxyalkyle, haloalkyle, benzyle, phényle et phényle substitué par un ou deux éléments choisis indépendamment dans le groupe constitué des halogènes, de groupes alkyle ayant jusqu'à 5 atomes de carbone, trifluorométhyle et nitro.

2. Procédé selon la revendication 1, dans lequel R est un groupe trifluorométhyl et X est un chloro.

3. Procédé selon la revendication 1, dans lequel la plante cultivée est le sorgho.

4. Procédé selon la revendication 1, dans lequel la plante cultivée est le maïs.

5. Procédé selon la revendication 2, dans lequel cet herbicide est le 2 - chloro - 2' - méthyl - 6' - méthoxy - N - (isopropoxyméthyl)acétanilide.

6. Procédé selon la revendication 2, dans lequel cet herbicide est le 2 - chloro - 2' - méthyl - 6' - trifluorométhyl - N - (éthoxyméthyl)acétanilide.

7. Procédé pour réduire les dégâts causés par les herbicides aux plants de sorgho par application à ceuxci d'un herbicide à base d'acétamide choisi parmi le 2 - chloro - 2' - méthyl - 6' - méthoxy - N - (isopropoxyméthyl)acétanilide et le 2 - chloro - 2' - méthyl - 6' - trifluorométhyl - N - (éthoxyméthyl) - acétanilide qui consite à revêtir la graine d'un plant de sorgho d'une quantité efficace comme sécurisant d'un composé répondant à la formule:

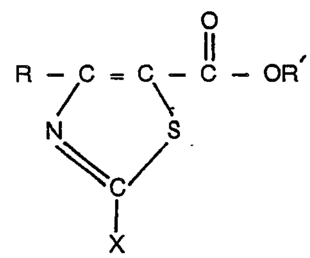

dans laquelle X est choisi parmi les radicaux chloro, bromo, iodo, et fluoro, R est un groupe haloalkyle, et R' est choisi dans le groupe constitué de l'hydrogène, de cations acceptables en agriculture, des groupes alkyle, alcényle, ou alcynyle ayant jusqu'à 5 atomes de carbone, de groupes alcoxyalkyle, haloalkyle, benzyle, phényle et phényle substitué par un ou deux éléments choisis indépendamment dans le groupe constitué des halogènes, de groupes alkyle ayant jusqu'à 5 atomes de carbone, des groupes trifluorométhyle et nitro.

8. Procédé selon la revendication 7, dans lequel X est un chloro.

9. Procédé selon la revendication 7, dans lequel R est un trifluorométhyle.

10. procédé selon la revendication 7, dans lequel X est un chloro et R est un trifluorométhyle.

11. Mélange qui comprend une quantité efficace comme herbicide d'un herbicide à base d'acétamide choisi parmi le 2 - chloro - 2' - méthyl - 6' - méthoxy - N - (isopropoxyméthyl)acétanilide et le 2 - chloro - 2' - méthyl - 6' - trifluorométhyl - N - (éthoxyméthyl)acétanilide et une quantité efficace comme sécurisant d'un composé répondant à la formule:

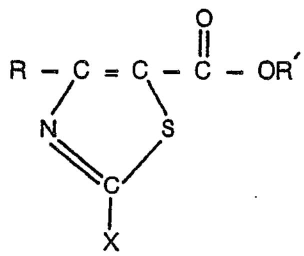

dans laquelle X est choisi parmi les radicaux chloro, bromo, iodo et fluoro, R est un groupe haloalkyle et R' est choisi parmi l'hydrogène, des cations acceptables en agriculture, des groupes alkyle, alcényle ou alcynyle ayant jusqu'à 5 atomes de carbone, des groupes alcoxyalkyle, haloalkyle, benzyle, phényle et phényle substitué par un ou deux éléments choisis indépendamment parmi les halogènes, des groupes alkyle ayant jusqu'à 5 atomes de carbone, trifluorométhyle et nitro; le rapport de l'herbicide à l'agent sécurisant était de 1:25 à 25:1.

12. Mélange selon la revendication 11, dans lequel R est un groupe trifluorométhyle et X est un chloro.

13. Mélange selon la revendication 11, dans lequel cet herbicide est le 2 - chloro - 2' - méthyl - 6' - méthoxy - N - (isopropoxyméthyl)acétanilide.

14. Mélange selon la revendication 11, dans lequel cet herbicide est le 2 - chloro - 2' - méthyl - 6' - trifluorométhyl - N - (éthoxyméthyl)acétanilide.

15. Terre contenant (1) un herbicide à base d'acétamide choisi parmi le 2 - chloro - 2' - méthyl - 6' - méthoxy - N - (isopropoxyméthyl)acétanilide et le 2 - chloro - 2' - méthyl - 6' - trifluorométhyl - N - (éthoxyméthyl)acétanilide et (2) des graines de sorgho revêtues d'une quantité efficace comme sécurisant d'un composé répondant à la formule:

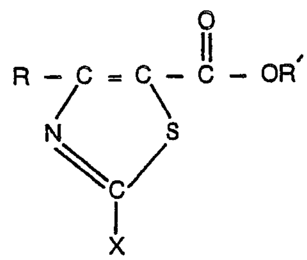

dans laquelle X est choisi parmi les radicaux chloro, bromo, iodo, fluoro, R est un groupe haloalkyle, et R' est choisi parmi l'hydrogène, des cations acceptables en agriculture, des groupes alkyle, alcényle ou alcynyle ayant jusqu'à 5 atomes de carbone, des groupes alcoxyalkyle, haloalkyle, benzyle, phényle et phényle substitués par un ou deux éléments choisis indépendamment parmi les halogènes, des groupes alkyle ayant jusqu'à 5 atomes de carbone, des groupes trifluorométhyle et nitro.

16. Terre selon la revendication 15, dans laquelle le composé sécurisant est le 2 - chloro - 4 - trifluorométhyl - 5 - thiazole carboxylate d'éthyle ou le 2 - chloro - 4 - trifluorométhyl - 5 - thiazole carboxylate de benzyle.